Europäisches Patentamt

European Patent Office

Office européen des brevets

(11) Publication number: **0 471 538 A2**

## EUROPEAN PATENT APPLICATION

(21) Application number: **91307407.6**

(22) Date of filing: **12.08.91**

(51) Int. Cl.⁵: **G06F 12/14**

(30) Priority: **13.08.90 GB 9017683**

(43) Date of publication of application:
**19.02.92 Bulletin 92/08**

(84) Designated Contracting States:
**CH DE FR IT LI**

(71) Applicant: **GEC-MARCONI (HOLDINGS)
LIMITED
The Grove, Warren Lane
Stanmore, Middlesex HA7 4LY (GB)**

(72) Inventor: **Taylor, Robert Anthony
25 The Highway
Stanmore, Middlesex HA7 3PL (GB)**
Inventor: **Oliver, Leslie Alan
282 Bidsford Green
Linslade, Bedfordshire LU7 7TU (GB)**

(74) Representative: **Keppler, William Patrick
Central Patent Department Wembley Office
The General Electric Company, p.l.c. Hirst
Research Centre East Lane
Wembley Middlesex HA9 7PP (GB)**

(54) **Data security system.**

(57) A data security system for protecting data discs and like bulk storage devices. A hardware encryption circuit (21) is incorporated in the disc controller (5) by which a host computer (3) accesses a disc (1). The encryption circuit (21) is activated (27) by a key, consisting of a card (25) and an associated number code, to decode data read from the disc or to encode data written to it. The system may thus be made automatic, without the intrusion of software security programs run by the host computer. Operation of the encryption circuit is wholly transparent to the host computer and no modification of the operating system or system software is necessary. Furthermore, the existing standard interfaces (7,9) of the disc controller with the disc and the computer can continue to be used.

EP 0 471 538 A2

*Fig.3.*

This invention relates to a data security system, particularly for securely storing data from a computer in a bulk storage device. This device may typically be a hard data disc but the invention is not so limited.

The known disc protection systems have traditionally carried out data encryption in the host computer. The encryption of data is performed either in hardware by means of an add-on circuit board, the so-called encryption "engine", or in software by means of specially written security programs, such as 'Crypt' for use under the UNIX operating system. However, protection systems of this type can often be by-passed and their operation tends to be intrusive both for the user and for the computer's operating system. A security program, for instance, must be explicitly run whenever a secure file on the disc is accessed and also when it is desired to protect data to be stored. This is prone to human error (it is easy to forget to protect data) and laziness of the part of the user. Furthermore, in both hardware- and software-based systems, the encryption process is liable to interfere with the running of commercially available programs and other software written by third parties. For maximum security, therefore, the data protection method should be as automatic and user-transparent as possible to minimise inconvenience and the chance of operator error. It is also preferred that encryption of data be performed in hardware, where the encryption process is substantially less susceptible of analysis and/or manipulation ("hacking") than if it were embodied in a software program.

An object of the present invention is to provide an improved data security system in which data from a computer can be protected with minimum intrusion in the operation of the computer.

According to one aspect of the present invention, in a data security system for providing secure access to data stored in a bulk storage device and comprising control means adapted to be coupled to, and to control the transfer of data between, a bulk storage device and a host computer, the control means includes a circuit effective to encode data to be transmitted from a host computer to a bulk storage device and to decode data to be transmitted in the reverse direction, the circuit being operable only in response to the operation of a key in conjunction with the control means.

According to another aspect of the invention, in a data security system for providing secure access to data stored in a bulk storage device and comprising a host computer, a bulk storage device and control means for controlling the transfer of data between the host computer and the bulk storage device, the control means includes a circuit effective to encode data to be transmitted from the host computer to the bulk storage device and to decode data to be transmitted in the reverse direction, the circuit being operable only in response to the operation of a key in conjunction with the control means.

The key may comprise a physical device, preferably a card having a stored code which constitutes an essential element in the coding process provided by said circuit.

Preferably the key further comprises a code number associated with the physical device. There may be included a key-pad for the generation of the code number and means for validating a code number so generated. The code number may be stored on said card.

There may be a plurality of keys for use in conjunction with the control means, the control means being adapted to associate said keys with respective storage areas of the bulk storage device, each key rendering said circuit operable exclusively in respect of data to be read from or written to its associated storage area.

In one embodiment of the invention, the control means is adapted to mark encoded data stored in the bulk storage device so that on read-out unencoded data is transmitted to the host computer without operation of said circuit. The control means may be adapted to provide an indication when encoded data is addressed without operation of said circuit.

The bulk storage device may be a data storage disc. A data security system in accordance with the invention will now be described, by way of example, with reference to the accompanying drawings, of which:

Figure 1 is a simple block diagram of a known, unprotected data storage arrangement for a personal computer;

Figure 2 shows the arrangement of Figure 1 in greater detail; and

Figure 3 is a block diagram of a data storage arrangement incorporating a data security system in accordance with the invention.

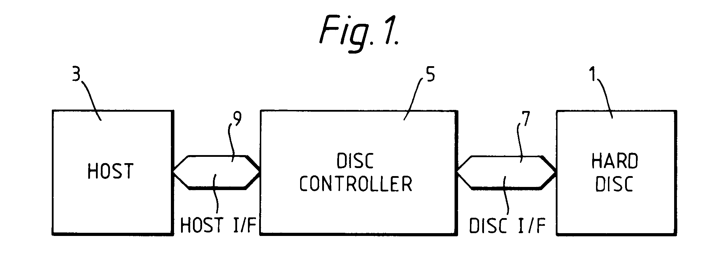

In Figure 1, a bulk storage device, in the form of a hard disc and disc drive unit 1, is connected to a host computer 3 by means of a control means in the form of a disc controller 5 in known manner. There are standard interfaces (7) between the disc unit 1 and the controller 5 and (9) between the controller 5 and host computer 3. There may be an additional floppy disc unit (not shown) interfaced with the disc controller in similar manner to the hard disc unit. This is a purely conventional, un-secured data storage arrangement. Data is processed by the host computer and transmitted by the disc controller to the disc. All non-volatile data storage is provided by the disc, any storage within the host being purely transitory. Accessing of the disc for further processing of the stored data is also achieved by way of the disc controller.

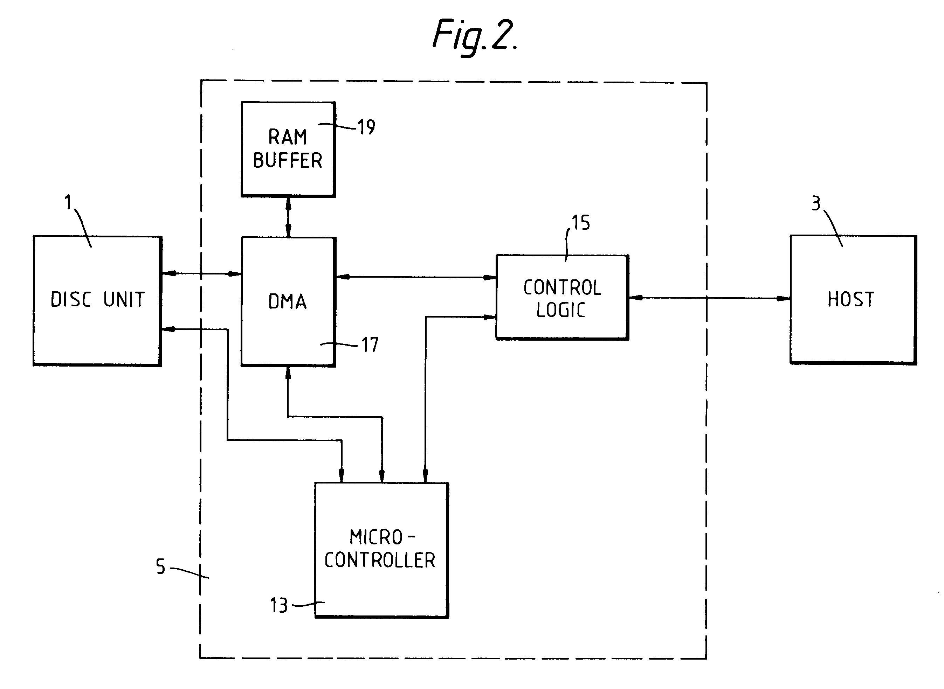

Figure 2 shows the same conventional arrangement in greater detail. The disc controller 5 comprises the control logic 15 and micro-controller 13, a DMA (direct memory address) circuit 17 and an associated temporary data store in the form of a RAM buffer 19.

The micro-controller 13, typically a single integrated circuit, controls the overall operation of the disc controller, communicating directly with the disc unit 1 and, via the control logic 15, with the host computer 3. When the host computer 3 requires access to data stored on the disc, an appropriate command is sent to the micro-controller 13 via the control logic 15. In response the micro-controller 13 first commands the disc unit 1 to find the sector of the disc holding the required data. It then controls 'unloading' of the data from the disc to the DMA circuit 17. The RAM buffer 19 provides a temporary store for the data in transit. The micro-controller 13 further controls the supply of data to the computer 3 via the control logic 15 which acts as a simple data buffer.

When data is to be stored on the disc a similar process occurs, the computer providing a command to store the data and the micro-controller controlling the flow of data through the disc controller and onto the disc. The location of data stored on the disc is determined essentially by a programmable storage controller circuit in the disc drive unit 1. This circuit organises the storage of data on the disc according to what sectors are free an d in the most efficient manner for subsequent retrieval according to instructions from the micro-controller. When data is stored on the disc, its location is communicated to the host computer via the micro-controller. Thus, the computer knows what data is stored where and can issue 'fetch' commands accordingly.

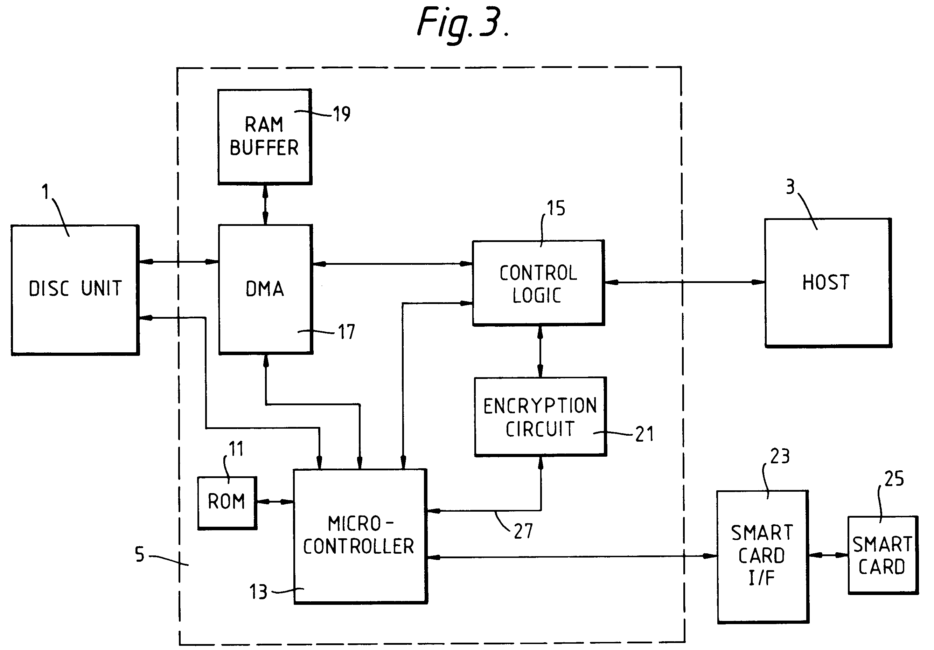

Figure 3 is a block diagram of a data storage arrangement incorporating a data security system. In accordance with the invention, the disc controller 5 incorporates a hardware encryption circuit 21, which encodes data passing from the host computer to the disc and decodes data passing in the reverse direction. Thus, in normal operation all data on the computer side of the disc controller will be un-secure but transitory, whereas data on the disc side of the disc controller will be encoded, secure and relatively permanent.

To achieve this conversion, operation of the encryption circuit 21 is controlled by the micro-controller 13, in response to a coded signal which must be provided on line 27 for the encryption circuit to operate, whether to encode or decode data. The coded signal is generated by means of a "key" which provides a multi-digit code. This code constitutes an essential element of the encryption process. The key comprises a card 25 on which the code is stored, for example magnetically or optically. The card 25 may be a "smart" card, i.e. carrying some form of active circuitry. An interface unit 23 reads the code on the card and converts it into the coded signal required to activate the encryption circuit 21. The coded signal is supplied to the encryption circuit via the micro-controller 13.

Thus, the encryption circuit cannot operate in the absence of the enabling key. The degree of security provided by the system is dependent upon the complexity of the code stored on the card. To enhance the security of the system, the key may comprise, in addition to the physical card, an associated personal code number which may be stored on the card 25 or in the disc controller, and is known only to the card holder or other authorised system user. The personal code may comprise a portion of the multi-digit code stored on the card. In this arrangement the interface unit 23 includes a key-pad, by means of which the user generates the code number, having inserted his card in the unit in the same manner that a normal bank cashpoint machine card is used. The "key" thus provided is validated by the interface unit checking the keyed-in code against that stored on the card. Once the key has been thus validated the coded signal required to enable the encryption circuit is generated. In this wry, unauthorised use of a card to gain access to secure data can be prevented. In the case of a smart card, the micro-controller may be configured so as to validate the key and vice versa. It will be appreciated, however, that the key and any means for validating it may be realised in any known manner which meets the basic requirement of securely enabling/disabling the encryption circuit.

Thus, when it is required to store data securely on the disc, the user must provide the correct key to activate the encryption circuit. Similarly, to gain access to secure data on the disc, the user must also provide the key. In the absence of the correct key no enabling signal is present on line 27, the encryption circuit will not operate, and either no data is passed to the disc or any data which is accepted will be stored but in unencoded, i.e. un-secure, form. On read-out the system may be arranged in various ways: the absence of the enabling signal may simply inhibit the encryption circuit and allow the encoded data to be read out to the computer in encoded form. This is likely to cause a system error. Alternatively, and preferably, the data path provided by the control logic 15 may be 'closed' in response to control signals from the encryption circuit and/or the micro-controller, and a warning or error signal generated when access is so denied. Thus, it can be seen that, whereas in the conventional, un-secured arrangement the control logic 15 acts as a simple buffer for data passing between the computer and the disc unit, in a secure system in accordance with the invention the control logic 15 has a more active role in controlling the flow of data between the disc unit and the computer and through the encryption circuit.

In a preferred embodiment of the invention, the system is arranged to cater for a number of authorised users. Each user is provided with a personal key card and code number. Each user is also allocated particular sectors of the disc for his own personal use. The coded signal which enables the encryption circuit to operate may be the same for all users so that the same encryption is applied to all data, but access to the disc is limited to the user's particular sectors. There may also be sectors of the disc designated as "common access" sectors, in which data is stored in unencoded form and available to all users of the system without the need to provide any key. There may also be common access sectors holding secure data which is available either to all users, or specific groups of users, who provide the correct key. The division of the disc into common access sectors and personal sectors is predetermined according to the system operator's particular requirements. The allocation of disc sectors is stored as a directory in a memory circuit 11 assotiated with the micro-controller 13. The memory circuit 11, which may comprise ROM, is preferably reprogrammable so that the directory can be modified if the requirements change. The memory circuit 11 may also store the personal codes of authorised users to enable the micro-controller to perform key validation.

In operation, an authorised user provides his key card and keys in his personal code as described above. When he requests access to a file on the disc, the micro-controller 13 determines from which sector of the disc it occupies whether the user has authority to access the file. This check is made by consulting the sector directory in the memory 11. If the user is entitled to access to the file, the encryption circuit is enabled and the micro-controller permits transfer of the file data to the computer. Similarly, if the user wishes to store data securely on the disc, the micro-controller will only permit it to be stored in one of his allocated sectors. The common access sectors may be protected so that, although data in them may be read out by any system user or authorised user, data may not be written to them. This provision for selective write protection of certain disc sectors provides a degree of protection against the introduction of 'virus' type programs into other users' files.

To facilitate the operation of the multi-user system, the disc may be marked, by imposition of a special format for example, to specifically indicate sectors occupied by secure data and un-secure data. By marking the sectors accordingly, the common access or "public" data may be transmitted to the computer unhindered, i.e. without operation of the encryption circuit, while secure data will demand decoding before being either produced in decoded form, or produced at all. The system may be configured to provide an indication when encoded data is addressed without operation of the encryption circuit to warn of an attempted illicit access. Marking of the disc to indicate secure data may take several forms. It may be a piece of coded data held at a known position on the disc or, alternatively, it may be encoded in the format information associated with each track on the disc. It may even be a physical label, for example a bar-coded sticker, attached to the disc cover which may be read by a specially adapted drive.

A significant advantage of a security system in accordance with the present invention stems from making the point of encryption within the disc controller. As a result, encryption of data is performed entirely at hardware level and, as such, is transparent to the host computer software. This means that any software which the host computer is running is unaffected by the operation of the security system and behaves exactly as it would on an un-secured computer. Similarly, the computer's operating system is unaffected. It will be appreciated, therefore, that the present invention lies essentially in the provision in a data storage system of a hardware encryption circuit within the control means, i.e. the disc controller in the specific example, which links a host computer with a data storage device. The computer has no direct wry of detecting whether it is accessing secure data or not, making it difficult to write programs which purposely exhibit different behaviour in a secured system. A further advantage of the system is that it may be fitted to any computer system which uses standard hardware interfaces between a host computer and a bulk data storage device such as a hard disc.

## Claims

1. A data security system for providing secure access to data stored in a bulk storage device and comprising control means (5) adapted to be coupled to, and to control the transfer of data between, a said bulk storage device (1) and a host computer (3), the control means (5) including a circuit (21) effective to encode data to be transmitted from a said host computer (3) to a said bulk storage device (1) and to decode data to be transmitted in the reverse direction, said circuit (21) being operable (27) only in response to the operation of a key (25) in conjunction with the control means (5).

2. A data security system for providing secure access to data stored in a bulk storage device and comprising a host computer (3), a bulk storage device (1) and control means (5) for controlling the transfer of data between the host computer (3) and the bulk storage device (1), wherein the control means (5) includes a circuit effective (21) to encode data to be transmitted from said host computer (3) to said bulk storage device (1) and to decode data to be transmitted in the reverse direction, said circuit (21) being operable (27) only in response to the operation of a key (25) in conjunction with the control means (5).

3. A security system according to Claim 1 or Claim 2, wherein said key (25) comprises a physical device.

4. A security system according to Claim 3, wherein said physical device is a card (25) having a stored code which constitutes an essential element in the coding process provided by said circuit (21).

5. A security system according to Claim 3 or Claim 4, wherein said key further comprises a code number associated with said physical device.

6. A security system according to Claim 5, including a key-pad for the generation of said code number and means for validating a code number so generated.

7. A security system according to Claim 5 or Claim 6, as appendent to Claim 4, wherein said code number is stored on said card.

8. A security system according to Claim 2, comprising a plurality of keys for use in conjunction with said control means, the control means being adapted to associate said keys with respective storage areas of said bulk storage device, each key rendering said circuit operable exclusively in respect of data to be read from or written to its associated storage area.

9. A security system according to Claim 2, wherein said control means is adapted to mark encoded data stored in said bulk storage device so that on read-out unencoded data is transmitted to said host computer without operation of said circuit.

10. A security system according to Claim 9, wherein said control means is adapted to provide an indication when encoded data is addressed without operation of said circuit.

11. A security system according to Claim 2, wherein said bulk storage device is a data storage disc.

Fig.1.

Fig.2.

## Fig.3.